# EUROPEAN PATENT APPLICATION

(11) **EP 2 319 982 A1**
(43) Date of publication of application: **11.05.2011**
(21) Application number: 09252910.6
(22) Date of filing: 24.12.2009
(51) Int. Cl.: D21B 1/32, D21F 9/00

(54) **Pulp concentration adjusting method of used paper recycling apparatus, pulp concentration adjusting device of used paper recycling apparatus, and used paper recycling apparatus**

(30) Priority: 06.11.2009 JP 2009254986
(71) Applicant: Seed Co., Ltd., Osaka-shi, Osaka (JP)
(72) Inventor: Tamai, Shigeru, Osaka-shi, Osaka (JP); Koyama, Yuji, Osaka-shi, Osaka (JP)
(74) Representative: Mounteney, Simon James

(57) **Abstract**

A pulp concentration adjusting technology for realizing a used paper recycling apparatus of furniture size that can be installed in a small shop or general household. The used paper recycling apparatus having a pulp making unit and a paper making unit includes a beating concentration adjusting unit (3A) for adjusting the beating concentration of the used paper pulp in the pulp making unit, and a paper making concentration adjusting unit (3B) for adjusting the paper making concentration of the used paper pulp in the paper making unit, in which the beating concentration adjusted in the beating concentration adjusting unit (3A) is set at a high concentration capable of beating in the pulp making unit, and the paper making concentration adjusted in the paper making concentration adjusting unit (3B) is set at a low concentration capable of making paper in the paper making unit. Therefore, the concentration of the used paper pulp is adjusted in two stages, and the concentration can be adjusted by effectively utilizing the small working space of the used paper recycling apparatus of furniture size, and the used paper can be recycled at high operation efficiency.

## Description

### BACKGROUND OF THE INVENTION

### Field of the Invention

The present invention relates to a pulp concentration adjusting method of used paper recycling apparatus, a pulp concentration adjusting device of used paper recycling apparatus, and a used paper recycling apparatus, and more particularly to a pulp concentration adjusting technology in a small-sized used paper recycling apparatus of furniture size to be installed at the site of origin of used paper, for recycling and processing into re-usable paper at the same site, without disposing or discarding the discharged used paper.

### Description of the Related Art

In daily activities at government offices or private companies, and in general household activities, used and unnecessary papers and documents are discarded as so-called used paper. Such pieces of used paper are generally discarded or incinerated as refuse, or disposed and discarded.

On the other hand, among the global mounting concern about effective utilization of limited resources on the earth, various technologies have been developed for effective use of discarded used paper without disposal.

These used paper recycling technologies are mostly developed and executed in the paper making field, and such used paper recycling facilities require a tremendous investment, same as in ordinary paper making facilities, such as a vast land, enough money, and a huge volume of water and chemicals for paper making, for high speed and mass production of recycled paper and higher quality.

Recycling of used paper requires a huge manual labor for collecting used paper, and collection of used paper involves many problems, such as mixing of foreign matter by collection by mass people, defective sorting by lack of knowledge about recycling from used paper, and removal of debris, and if used paper is collected, further sorting and cleaning by professionals may be needed until the used paper is recycled by 100%. Moreover, confidential documents are not discarded easily from the viewpoint of confidentially, and are usually disposed by incineration, and recycling is not promoted.

To solve these problems in used paper collection, it is effective to develop a technology of collecting and recycling at the site of origin of used paper, and from this point of view, the present applicant developed and presented a used paper recycling apparatus as disclosed, for example, in Japanese Patent Application Laid-Open No. 2007-308837.

This used paper recycling apparatus has realized a used paper recycling technology of a large size equal to a used paper recycling plant, in a small size to be installed in a small shop, or in a room of general household, and the apparatus is contained in an apparatus case of furniture size, and includes a pulp making unit for making used paper pulp by fragmenting and beating used paper, a pulp concentration adjusting unit for adjusting the concentration of the used paper pulp manufactured in this pulp making unit, a paper making unit for manufacturing recycled paper from the used paper pulp manufactured in the pulp making unit, and a control unit for driving and controlling in cooperation with the pulp making unit, the pulp concentration adjusting unit, and the paper making unit.

Herein, the used paper is fragmented and beaten by the pulp making unit, and made into pulp, and is further processed in the pulp concentration adjusting unit to become used paper pulp of a desired concentration, and is manufactured in the paper making unit to become recycled paper. In this case, in the pulp making process, the used paper is decomposed into a fiber level, and the written characters and drawings are completely decomposed and destroyed, and cannot be restored, and leak or disclosure of confidential information and personal information composed of characters and drawings can be securely prevented.

### SUMMARY OF THE INVENTION

It is hence a primary object of the present invention to present a novel pulp concentration adjusting technology of a used paper recycling apparatus capable of solving the problems of the prior art.

It is other object of the present invention to present a pulp concentration adjusting technology for realizing a used paper recycling apparatus of furniture size to be installed not only in a large office, but also in a small shop or a room in general household, being friendly to the environment and low in running cost, capable of preventing leak or disclosure of confidential information, personal information or various data securely, and keeping a high confidentiality, by further improving the structural technology of the pulp concentration adjusting unit in the used paper recycling apparatus.

To achieve the objects, the pulp concentration adjusting method of the used paper recycling apparatus of the present invention is a pulp concentration adjusting method used in a used paper recycling apparatus, the used paper recycling apparatus comprising a pulp making unit for fragmenting and beating the used paper to make used paper pulp, and a paper making unit for manufacturing recycling paper by making from the used paper pulp manufactured in this pulp making unit, these pulp making unit and paper making unit being installed in an apparatus case of furniture size, the method being intended to adjust the concentration of the used paper pulp supplied in the paper making unit by adjusting the mixing rate of the used paper and water supplied in the apparatus, and the method comprising a beating concentration adjusting process for adjusting the beating concentration of the used paper pulp in the pulp making unit, and a paper making concentration adjusting process for adjusting the paper making concentration of the used paper pulp in the paper making unit, in which the beating concentration adjusted in the beating concentration adjusting process is set at a high concentration capable of beating in the pulp making unit, and the paper making concentration adjusted in the paper making concentration adjusting process is set at a low concentration capable of making paper in the paper making unit.

Herein, the "high concentration" and the "low concentration" refer to two relatively different concentrations, and of these two concentrations to be compared, the one relatively higher is called a high concentration, and the other relatively lower is called a low concentration (this relation is meant the same throughout the specification and the claims).

A preferred embodiment may be composed as follows.
(1) The beating concentration adjusted in the beating concentration adjusting process is set at a maximum concentration allowable for the beating capacity of the pulp making unit.
(2) The paper making concentration adjusted in the paper making concentration adjusting process is set at an appropriate concentration corresponding to the finished paper quality of the recycled paper to be recycled.
(3) The paper making concentration adjusting process is intended to divide a specified small portion from the whole volume of the used paper pulp manufactured in the pulp making unit, and add a specified amount of water for adjusting the concentration corresponding to the divided specified small portion of the used paper pulp, thereby mixing and adjusting a pulp suspension of a specified concentration in a divided style.
(4) In the paper making concentration adj usting process, the concentration adjusting interval for adjusting the concentration of the used paper pulp in the divided style is determined so that at least the supply capacity of the concentration-adjusted pulp suspension into the later process of the paper making unit may be larger than the paper making process capacity in the paper making unit.
(5) In the beating concentration adjusting process and the paper making concentration adjusting process, the concentration is adjusted by weight type adjustment by measuring the weight of the mixing rate of the used paper and water to be charged into the apparatus.

The pulp concentration adjusting device of the used paper recycling apparatus of the invention is a pulp concentration adjusting device of a used paper recycling apparatus, being a pulp concentration adjusting device used in a used paper recycling apparatus, the used paper recycling apparatus comprising a pulp making unit for fragmenting and beating the used paper to make used paper pulp, and a paper making unit for manufacturing recycling paper by making from the used paper pulp manufactured in the pulp making unit, these pulp making unit and paper making unit being installed in an apparatus case of furniture size, the pulp concentration adjusting device being intended to adjust the concentration of the used paper pulp supplied in the paper making unit by adjusting the mixing rate of the used paper and water supplied in the apparatus, the device comprising beating concentration adjusting means for adjusting the beating concentration of the used paper pulp in the pulp making unit, paper making concentration adjusting means for adjusting the paper making concentration of the used paper pulp in the paper making unit, and pulp concentration control means for driving and controlling in cooperation with the beating concentration adjusting means and the paper making concentration adjusting means, in which the beating concentration adjusted by the beating concentration adjusting means is set at a high concentration capable of beating by beating means, and the paper making concentration adjusted by the paper making concentration adjusting means is set at a low concentration capable of making paper in the paper making unit.

A preferred embodiment may be composed as follows.
(1) The beating concentration adjusted by the beating concentration adjusting means is set at a maximum concentration allowable for the beating capacity of the beating means.
(2) The paper making concentration adjusted by the paper making concentration adjusting means is set at an appropriate concentration corresponding to the finished paper quality of the recycled paper to be recycled.
(3) The paper making concentration adjusting means includes division extracting means for dividing and extracting a specified small portion from the whole volume of the used paper pulp manufactured in the pulp making unit, suspension preparing means for preparing a pulp suspension of a specified concentration by adding a specified amount of water for adjusting the concentration to the specified small portion of the used paper pulp divided and extracted by the division extracting means, and paper making concentration adjusting means for driving and controlling in cooperation with the division extracting means and the suspension preparing means.
(4) The paper making concentration adjusting means drives and controls the division extracting means and the suspension preparing means so that at least the supply capacity of the concentration-adjusted pulp suspension into the later process of the paper making unit may be larger than the paper making process capacity in the paper making unit.
(5) The paper making concentration adjusting means includes a pulp supply tank for storing the pulp suspension adjusted to a specified concentration, and this pulp supply tank has agitating means for agitating the pulp suspension stored and held in the pulp supply tank.
(6) The beating concentration adjusting means and the paper making concentration adjusting means are of weight type, that is, the mixing rate of the used paper and water to be charged into the apparatus is adjusted by measuring the weight, and the concentration of the used paper pulp supplied in the paper making unit is adjusted.

The used paper recycling apparatus of the present invention includes, in an apparatus case of furniture size, a pulp making unit for fragmenting and beating the used paper to make use paper pulp, a paper making unit for manufacturing recycling paper by paper making from the used paper pulp manufactured in the pulp making unit, a pulp concentration adjusting unit for adjusting the concentration of the used paper pulp supplied in the paper making unit, and a device control unit for driving and controlling in cooperation with the pulp making unit, the paper making unit, and the pulp concentration adjusting unit, in which the pulp concentration adjusting unit is composed of the pulp making device described above.

According to the present invention, the used paper pulp concentration adjusting process for adjusting the mixing rate of the used paper and water charged in the used paper recycling apparatus, and adjusting the concentration of the used paper pulp supplied in the paper making unit includes the beating concentration adjusting process for adjusting the beating concentration of the used paper pulp in the pulp making unit, and the paper making concentration adjusting process for adjusting the paper making concentration of the used paper pulp in the paper making unit, and therefore it can be installed not only in a large office, but also in a small shop or a room in general household, being friendly to the environment and low in running cost, capable of preventing leak or disclosure of confidential information, personal information or various data securely, and keeping a high confidentiality, thereby realizing a used paper recycling apparatus of furniture size.

That is, the beating concentration adjusted in the beating concentration adjusting process is set at a high concentration capable of beating in the pulp making unit, for example, a maximum concentration allowable for the beating capacity of the pulp making unit, and the paper making concentration adjusted in the paper making concentration adjusting process is set at a low concentration capable of making paper in the paper making unit, for example, an appropriate concentration corresponding to the finished paper quality of the recycled paper to be recycled, and the concentration of the used paper pulp can be adjusted in two stages, and the concentration can be adjusted by effectively utilizing the small working space of the used paper recycling apparatus of furniture size, and the used paper can be recycled at high operation efficiency.

That is, the beating process in the pulp making unit of relatively high concentration is carried out efficiently by the used paper pulp adjusted to a high concentration (beating concentration) by the beating concentration adjusting means, and this used paper pulp is adjusted to a low concentration (paper making concentration) corresponding to the finished paper quality of the recycled paper by the paper making concentration adjusting means, and is sent into the successive paper making unit, so that a series of used paper recycling process can be efficiently carried out in a narrow working space.

Moreover, since particularly large power is not needed for operation of the used paper recycling apparatus of small size and high operation efficiency, the running cost is low, and it is ideal for the used paper recycling apparatus of furniture size that can be installed in a small shop or in a room of general household.

It can be installed not only in a large office, but also in a small shop or a room in general household, and it is capable of preventing leak or disclosure of confidential information, personal information or various data securely, and keeping a high confidentiality, thereby realizing a used paper recycling apparatus of furniture size.

Since the pulp concentration is adjusted by the weight type for adjusting the concentration of the used paper pulp by measuring the weight for determining the mixing rate of used paper and water, the concentration can be adjusted flexibly if the used paper is charged irregularly.

In the paper making concentration adjusting process, a specified small portion is divided out of the whole volume of the used paper pulp manufactured in the pulp making unit, and a specified amount of water for concentration adjustment is added to the specified small portion of the divided used paper pulp, and the concentration of the used paper pulp is adjusted in small portions, not in batch, and therefore the water consumption is saved and the apparatus is reduced in size while the processing capacity is enhanced.

The other objects and features of the present invention will be understood and appreciated by reading the following detailed description along with the accompanying drawings, and novel facts indicated in the claims thereof.

### BRIEF DESCRIPTION OF THE DRAWINGS

Fig.1 is a front sectional view showing an overall outline configuration of a used paper recycling apparatus in a preferred embodiment of the present invention.
Fig. 2 is a side sectional view of an overall outline configuration of the used paper recycling apparatus.
Fig. 3 is a magnified front view of a partial section of principal configuration of a beating unit of the used paper recycling apparatus.
Fig. 4 is a magnified front view of an internal configuration of a grinder as a principal component of the beating unit.
Fig. 5 is a circuit diagram of a configuration of used paper pulp circulation route of the beating unit.
Fig. 6 is a block diagram of a configuration of pulp concentration adjusting unit of the used paper recycling apparatus.
Fig. 7 is a block diagram of control configuration of the used paper recycling apparatus.
Fig. 8 is a perspective view of outline configuration of the used paper recycling apparatus.

### DETAILED DESCRIPTION OF THE PREFERRED EMBODIMENT

A preferred embodiment of the present invention is specifically described below while referring to the accompanying drawings. Throughout the drawings, same reference numerals refer to same components or elements.

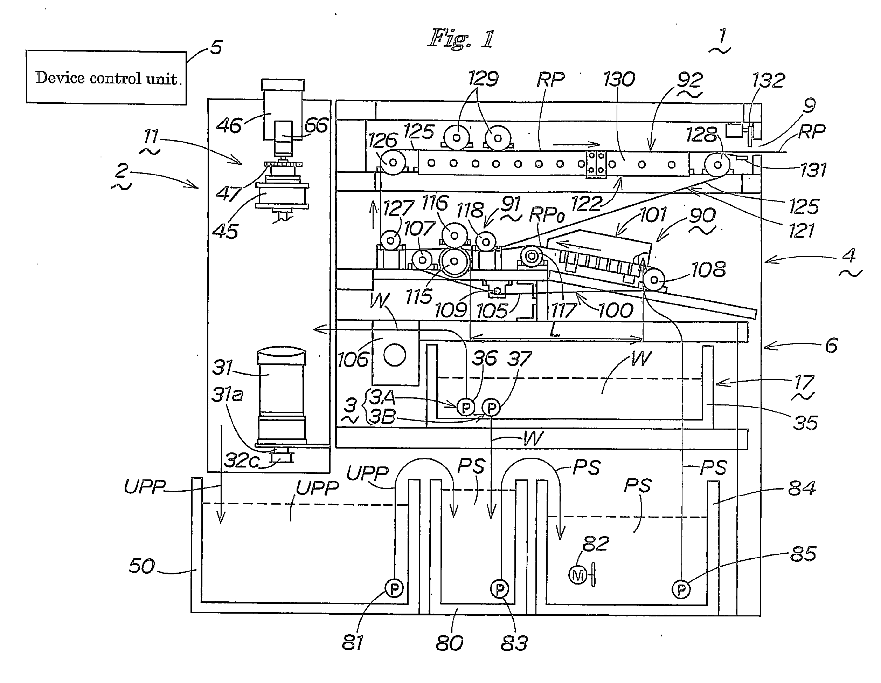

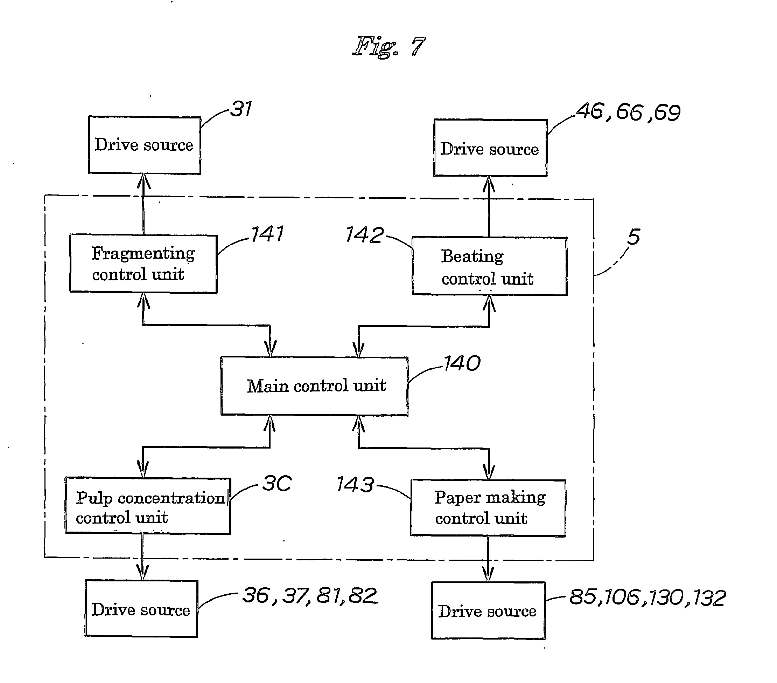

The used paper recycling apparatus of the present invention is shown in Fig. 1 to Fig. 8, in which a used paper recycling apparatus 1 is installed specifically at the site of occurrence of used paper, and is an apparatus for recycling the occurring used paper UP into re-usable paper at the site without disposing or discarding, and such used paper UP includes confidential documents occurring in government offices and private companies, and private letters in general household, and other used and unnecessary documents.

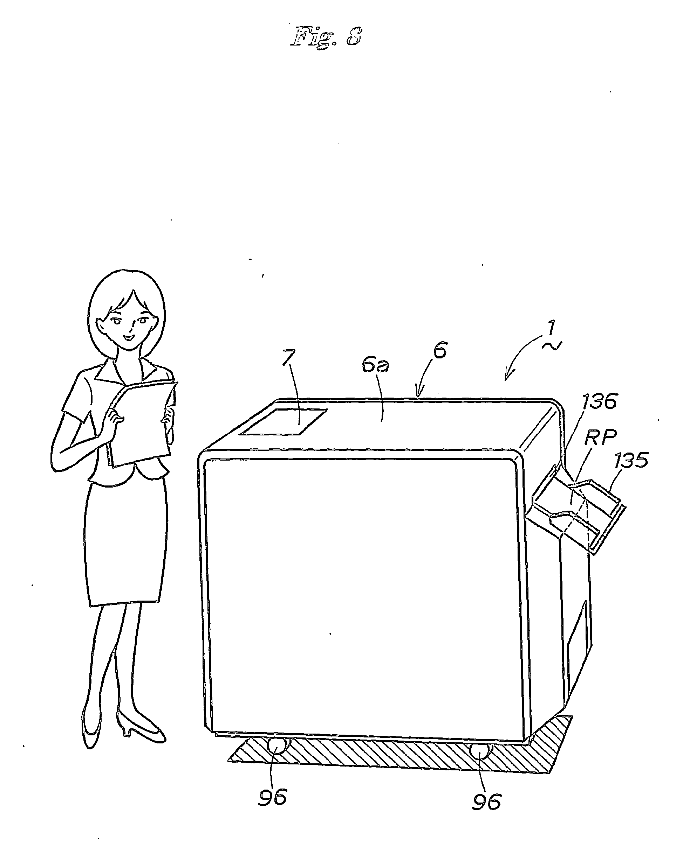

The used paper recycling apparatus 1 has a furniture size as shown in Fig. 8, that is, the size and shape similar to office equipment, such as document rack, locker, desk, copier, or personal computer, and is mainly composed of a pulp making unit 2, a pulp concentration adjusting unit (pulp concentration adjusting means) 3, a paper making unit 4, and a device control unit 5 as shown in Fig. 1, and these device components 2 to 5 are accommodated and contained in an apparatus case 6 in a compact design.

The apparatus case 6 has a furniture size as mentioned above, and the specific dimensions and shape are designed properly depending on the purpose and application. The apparatus case 6 in the illustrated preferred embodiment is a cubic box having dimensions and shape like a copier used in an office, and the outer circumference is covered with a decorative case cover 6a. The bottom of the apparatus case 6 is provided with casters 96, 96, ... as moving means so as to be moved freely on the floor. In the ceiling of the apparatus case 6, a closable inlet 7 is provided for supplying used paper UP, and a recycled paper receiving tray 135 is provided detachably at the side for receiving recycled paper RP, RP, .... The recycled paper receiving tray 135 is oppositely provided with a discharge port 136 of the apparatus case 6, and the recycled paper RP, RP, ... discharged from the discharge port 136 are sequentially received in layers.

The pulp making unit (pulp making device) 2 is a process unit for fragmenting and beating the used paper UP for manufacturing used paper pulp, and is mainly composed of a fragmenting unit 10 for agitating, crushing and fragmenting the used paper UP, and a beating unit 11 for beating the used paper UP fragmented in this fragmenting unit 10.

The fragmenting unit 10 is a process unit for agitating, crushing and fragmenting the used paper UP, and is mainly composed of a fragmenting tank 15, an agitating device (agitating means) 16, and water feeding device (water feeding means) 17.

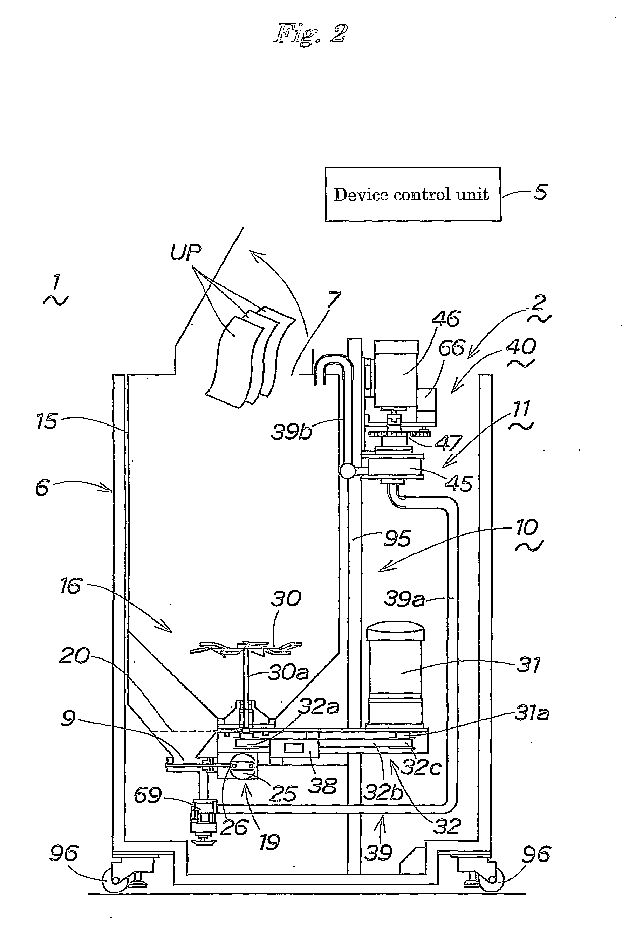

The fragmenting tank 15 is provided with the inlet (used paper inlet) 7 for feeding and supplying used paper UP in the ceiling wall as shown in Fig. 2, and a discharge port 9 for discharging the fragmented used paper pulp UPP to the downstream side is provided in the bottom wall. The inner volume of the fragmenting tank 15 is determined depending on the number of sheets of used paper UP to be agitated and processed in batch. In the shown preferred embodiment, about 98 liters of water is added, and the fragmenting tank 15 has a capacity of agitating and processing about 500 sheets (about 2000 g) of used paper UP of A4 format PPC (plain paper copier) (in batch process). At this time, the concentration of used paper pulp UPP to be fragmented is about 2%. This concentration is adjusted by feeding water from a water feeding device 17, and this water feeding device 17 forms a part of the pulp concentration adjusting unit (pulp concentration adjusting means) 3.

The inlet 7 has a structure can be opened and closed to outside of the case cover 6a of the apparatus case 6. The discharge port 9 can be opened and closed by an opening valve 19, and communicates with a used paper pulp circulation route 39 described below. At the position of the discharge port 9, a debris filter 20 is provided for removing paper clips, staples, wires and others used for binding used paper UP, UP, ... which may become troubles in the subsequent beating process.

The opening valve 19 is specifically opened and closed by the crank motion of a crank mechanism 26 by a drive motor 25. The drive motor 25 is specifically an electric motor, and the drive motor 25 is electrically connected to the device control unit 5.

The agitating device 16 is provided inside of the fragmenting tank 15, and is provided with an agitating impeller 30 and a drive motor 31.

The agitating impeller 30 has its rotation shaft 30a rotatably supported upright in the central position of the bottom of the fragmenting tank 15, and is provided so as to be free to rotate horizontally, and the lower end of the rotation shaft 30a is driven and coupled to a rotation shaft 31a of the drive motor 31 by way of transmission means 32 composed of a transmission pulley 32a, a transmission belt 32b, and a transmission pulley 32c.

By normal and reverse rotation of the agitating impeller 30, if the used paper UP is agitated directly in its original A4 format, by the water jet action of normal rotation and reverse rotation of the agitating impeller 30, the used paper UP is dispersed effectively, and entangling on the agitating impeller 30 can be effectively prevented.

The blade shape of the agitating impeller 30 is designed so as to be different in the agitating force (dispersion effect) in normal rotation and reverse rotation, and hence the used paper UP, UP, ... may be fragmented and beaten uniformly.

The operating conditions of the agitating impeller 30, such as changeover timing of normal rotation and reverse rotation, and the agitation time are determined on the basis of the preliminary experiment data so as to obtain desired fragmenting and beating effects of used paper UP, UP, ....

The water feeding device 17 is to supply water into the agitating tank 15, and composes a beating concentration adjusting unit (beating concentration adjusting means) 3A of the pulp concentration adjusting unit (pulp concentration adjusting means) 3 as described later.

The water feeding device 17 in the illustrated preferred embodiment includes, as shown in Fig. 1, a white water collecting tank 35, a water feeding pump 36 for adjusting the beating concentration, and a water feeding pump 37 for adjusting the paper making concentration. The white water collecting tank 35 is designed to, as described later, collect white water W filtered and dewatered in the paper making unit 4 (pulp water of very low concentration filtered by the paper making mesh in the paper making process), and the white water W collected in this white water collecting tank 35 is supplied into the fragmenting tank 15 from the water feeding pump 36, and into a concentration adjusting tank 80 described later from the water feeding pump 37.

In this relation, a weight sensor 38 is provided in the bottom of the fragmenting tank 15, and the amount of used paper UP, UP, ... and water to be processed in batch in the fragmenting tank 15 is measured and controlled, and the weight sensor 38 is electrically connected to the device control unit 5.

The weight sensor 38 of the illustrated preferred embodiment is a load cell, and is designed to detect and measure the total weight of the weight of the used paper UP, UP, ... and water supplied into the fragmenting tank 15.

In a specific control configuration of the fragmenting unit 10, first the worker opens the inlet 7, and used paper UP, UP, ... are charged into the fragmenting tank 15, and the weight is detected and measured by the weight sensor 38, and when reaching a specified amount (number of sheets), the worker is informed by sound and/or display. According to the display, the worker closes the inlet 7, and the water feeding device 17 is driven, and the water feeding pump 36 supplies the water W in the white water collecting tank 35 into the fragmenting tank 15 by the amount corresponding to the weight (number of sheets) of charged used paper UP, UP, ....

If the worker closes the inlet 7 after charging an arbitrary amount (an amount smaller than the specified mount (number of sheets)) of used paper UP, UP, ... into the fragmenting tank 15 from the inlet 7, the weight is sensed and measured by the weight sensor 38, and the water feeding device 17 is driven, and an amount of water W suited to the measured result is supplied into the fragmenting tank 15 from the white water collecting tank 35 by the water feeding pump 36.

In the illustrated preferred embodiment, as mentioned above, when the PPC used paper UP of A4 format of about 500 sheets (about 2000 g) is charged into the fragmenting tank 15, the worker is informed at this moment by sound and/or display, and when the inlet 7 is closed, about 98 liters of water is supplied into the water feeding device 17, or when the used paper UP, UP, ... is charge by an arbitrary amount (an amount smaller than the specified mount (number of sheets)), the water corresponding to this used paper charging amount is supplied from the water feeding device 17, and the concentration of the fragmented used paper pulp UPP is controlled and adjusted to about 2%.

In the agitating device 16, the used paper UP, UP,... charged into the fragmenting tank 15 from the opening or the inlet 7 of the apparatus case 6 are, by normal and reverse rotation of the agitating impeller 30 by the drive motor 31, agitated and mixed for a specified time (about 10 minutes to 20 minutes in the illustrated preferred embodiment) in the water supplied from the water feeding device 17, and thereby the used paper UP, UP, ... are fragmented and beaten, and transformed into used paper pulp UPP.

The discharge port 9 of the fragmenting tank 15 is closed by the opening valve 19 during normal operation of the fragmenting unit 10, and flow of used paper UP or used paper pulp UPP from the fragmenting tank 15 into the used paper pulp circulation route 39 is blocked, and during operation of the beating unit 11 mentioned below, the discharge port 7 is opened by the opening valve 19, and flow of used paper pulp UPP from the fragmenting tank 15 into the used paper pulp circulation route 39 is permitted along with the circulatory flow.

The beating unit 11 is a process unit for beating the used paper UP fragmented in the fragmenting unit 10, and more specifically the used paper UP fragmented in the fragmenting unit 10 is pressurized and beaten, and inks forming characters and drawings on the used paper UP (including printing inks forming characters and drawings on the used paper UP various printing techniques, or inks forming characters and drawings on the used paper UP by pencil, ballpoint pen, fountain pen, other writing tools) are ground and pulverized (until micro-fibers).

The beating unit 11 has at least one beating means (one unit in the illustrated preferred embodiment) 40.

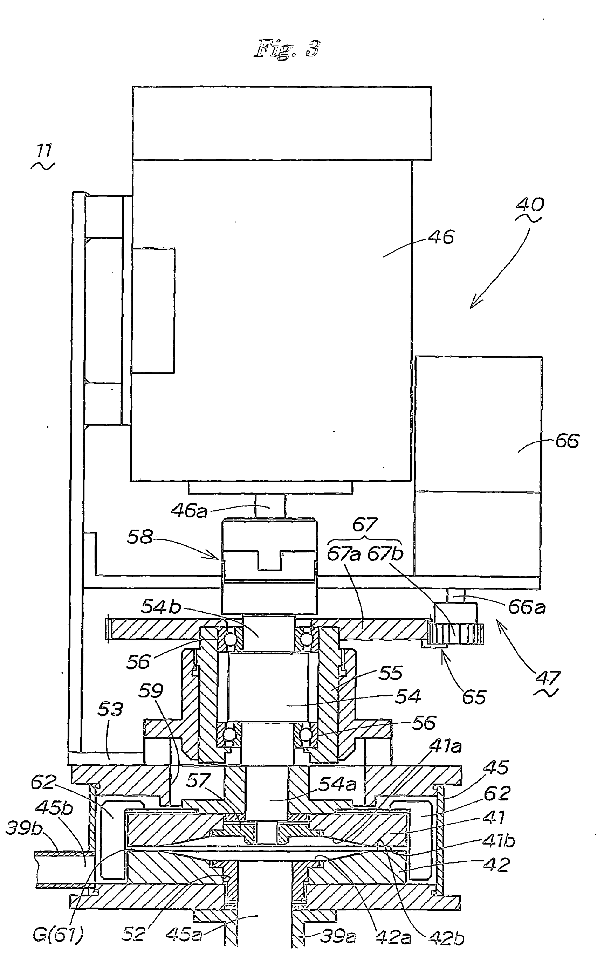

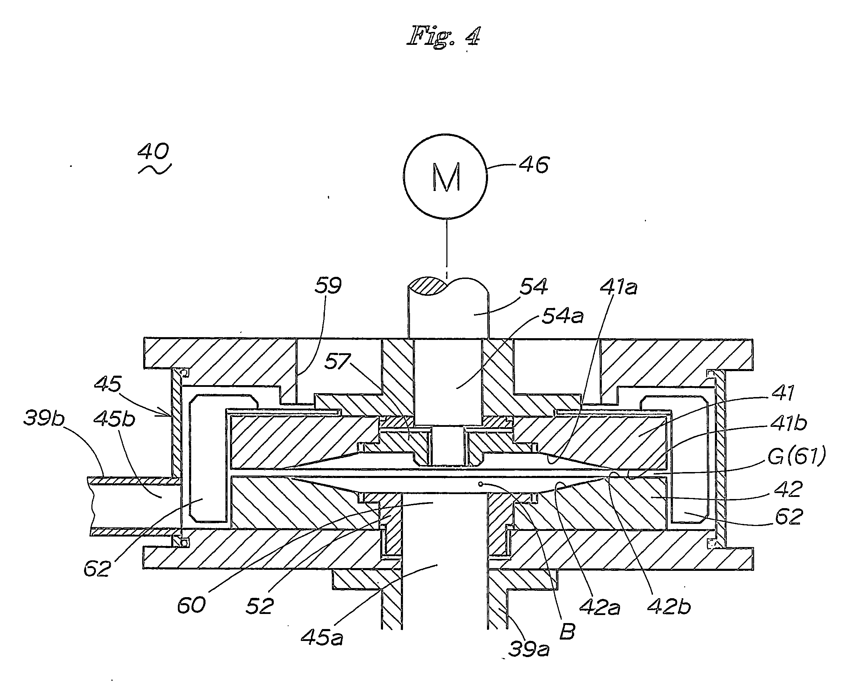

The beating means 40 is a grinder mainly having a pair of beating disks 41, 42 rotated and driven relatively as principal components as shown in Fig. 3 and Fig. 4, and the pair of beating disks 41, 42 have beating action surfaces 41a, 42a disposed oppositely and concentrically across a tiny beating gap G.

The beating gap G of the beating action surfaces 41a, 42a of the grinder (beating means) 40 is set to be narrower gradually from the beginning of the grinder 40 till the end of the grinder 40 in the beating process as described below.

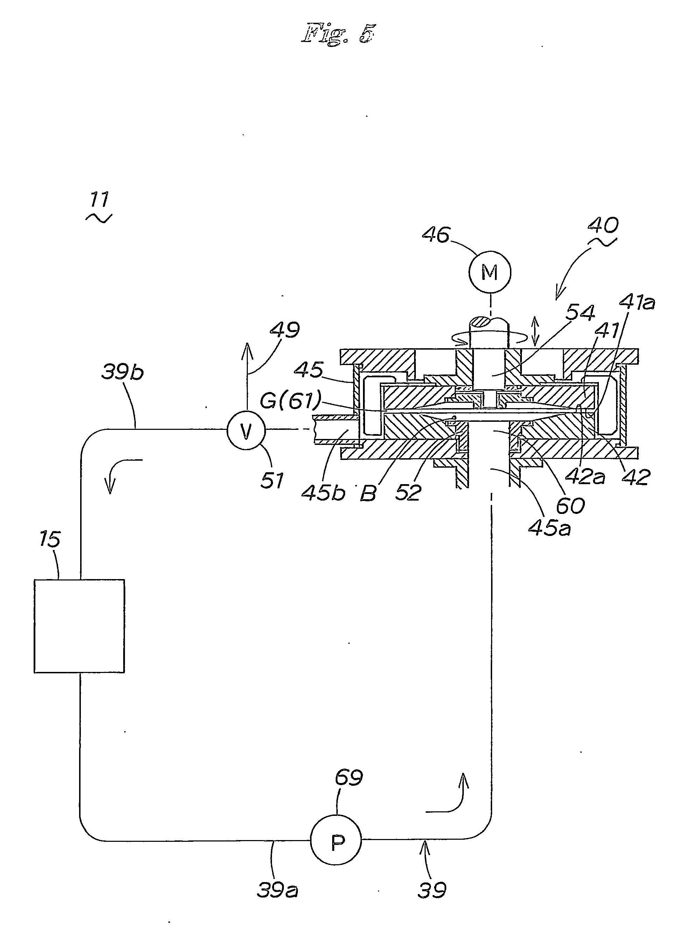

In the beating unit 11 of the present preferred embodiment, as shown in Fig. 5, the used paper pulp circulation route 39 having one grinder 40 is formed, and the used paper pulp UPP is beaten and processed as being circulated for a specified time by way of the grinder 40 in the circulation system.

By execution of the beating process by this used paper pulp circulation route 39, in spite of the small and limited process space in the apparatus case 6 of furniture size, the used paper pulp beating process route of an infinite length basically not limited in length can be formed, and it is capable of assuring a wide beating process space nearly equal to the beating process in a large apparatus, and an appropriate beating effect is obtained depending on the purpose.

Besides, since one grinder 40 beats and processes throughout the whole process of the beating process, this one grinder 40 plays the function of a plurality of grinders, from the grinder at the beginning till the grinder at the end of the beating process. Specifically, the beating gap G of the beating action surfaces 41a, 42a of the grinder 40 is controlled and adjusted to be narrower gradually from the beginning till the end of the beating process.

The grinder 40 in the illustrated preferred embodiment is provided on an apparatus machine body 95 for composing the apparatus case 6, adjacently to the fragmenting tank 15 of the fragmenting unit 10, and includes, as shown in Fig. 3, a beating tank 45 communicating with the fragmenting tank 15 of the fragmenting unit 10, a pair of beating disks 41, 42 provided in the beating tank 45 to be rotatable relatively, a rotation drive source 46 for relatively rotating and driving the pair of beating disks 41, 42, and gap adjusting means 47 for adj usting the beating gap G of the pair of beating disks 41, 42.

The beating tank 45 formed in a closed cylindrical shape so as contain the pair of beating disks 41, 42, and has a feed port 45a for supplying the used paper pulp UPP from the upstream side, and a discharge port 45b for discharging the beaten used paper pulp UPP to the downstream side.

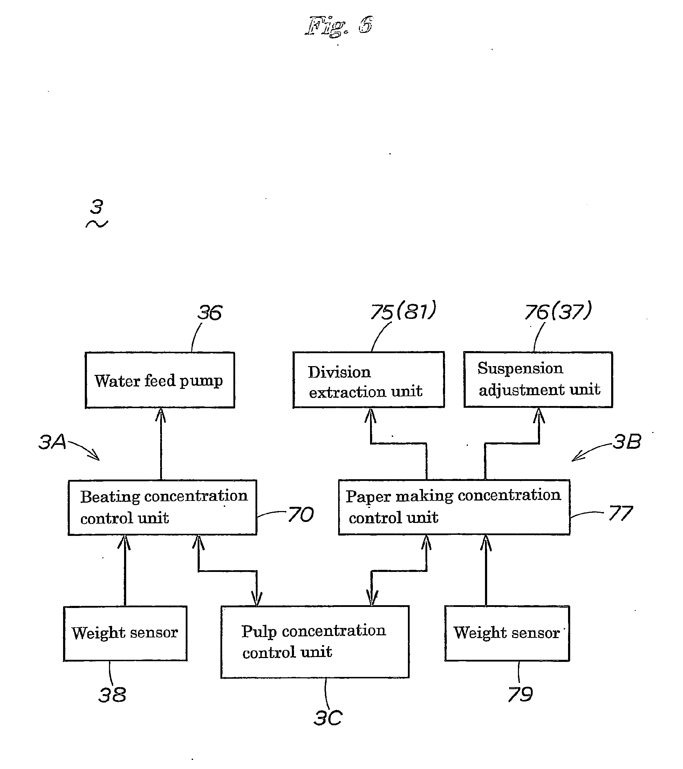

More specifically, the feed port 45a is opened in the center of the bottom of the beating tank 45 toward the vertical direction, and the discharge port 45b is opened at the cylindrical side of the beating tank 45 toward the horizontal direction. The feed port 45a and the discharge port 45b communicate with the fragmenting tank 15 of the fragmenting unit 10 as shown in Fig. 2 and Fig. 6 by way of circulation piping 39a, 39b respectively, and the discharge port 45b further communicates with a used paper pulp collection tank 50 by way of a discharge piping 49.

Reference numeral 51 is a direction changeover valve, and by the changeover action of this direction changeover valve 51, the used paper pulp UPP discharged from the discharge port 45b is selectively refluxed into the fragmenting tank15, or collected in the used paper pulp collection tank 50. The direction changeover valve 51 is specifically an electromagnetic opening valve, and is electrically connected to the device control unit 5.

The pair of beating disks 41, 42 consist of one fixed beating disk fixed in the rotating direction, and other rotatable beating disk, and in the illustrated preferred embodiment, as shown in Fig. 5, the upper beating disk 41 is the rotatable side, and the lower beating disk 42 is the fixed side.

The lower fixed side beating disk 42 is fixed to the inner side of the bottom of the beating tank 45 by means of a screw-type hollow fixing member 52, and the upper rotary side beating disk 41 is disposed oppositely to this fixed side beating disk 42, concentrically and rotatably relatively across a tiny beating gap G.

This rotary side beating disk 41 is driven and coupled by a drive motor 46 by way of a rotation spindle 54 supported on an apparatus base 53 mounted and fixed on an apparatus machine body 95 rotatably and movably in the axial direction.

The rotation spindle 54 is supported on an elevating member 55 of the gap adjusting means 47 described later, rotatably by bearings 56, 56, and the rotary side beating disk 41 is formed at its leading end portion 54a concentrically and integrally by means of a mounting nut member 57, and its base end portion 54b driven and coupled to a rotation shaft 46a of the drive motor 46 by means of a shaft coupling 58, integrally in the rotating direction and movably in the axial direction relatively.

The drive motor 46 is a rotation drive source, which rotates and moves the pair of beating disks 41, 42 relatively, and it is specifically an electric motor, and this drive motor 46 is electrically connected to the device control unit 5.

The leading end portion 54a of the rotation spindle 54 is opposite to the inside of the beating tank 45 by way of an opening 59 in the center of the ceiling of the beating tank 45, and the interval of the opening 59 and the rotation spindle 54 is not sealed, and the inside and the outside of the beating tank 45 communicate with each other, and the seal structure is simplified. The sealing performance of this location is assured by controlling and adjusting the volume of the used paper pulp UPP so that the discharge amount from the discharge port 45b may be larger than the supply amount from the feed port 45a.

The opposite sides 41a, 42a of the both beating disks 41, 42 having the tiny beating gap G cooperate to form the beating action surfaces. These opposite beating action surfaces 41a, 42a formed as wheel surfaces having multiple abrasive grains bonded by a bonding material, and the both beating action surfaces 41a, 42a are formed in a taper shape, as shown in Fig. 4, so that the diameter dimensions may be larger continuously in the mutually opposite directions, and annular flat surfaces 41b, 42b are formed so that the outermost peripheral edges may be parallel to each other, and these annular flat surfaces 41b, 42b are forming the beating gap G.

In other words, in the pair of beating disks 41, 42, in the central position of the beating action surface 42a of the fixed side beating disk 42, an inlet 60 communicating concentrically with the feed port 45a of the beating tank is formed, and two annular flat surfaces 41b, 42b formed on the outer peripheral edge of the beating action surfaces 41a, 42b of the pair of beating disks 41, 42 communicate with the discharge port 45b of the beating tank 45, and form an outlet 61 having the beating gap G.

On the outer circumference of the rotary side beating disk 41, a plurality of blades 62, 62, ... are provided at specified intervals in the circumferential direction, and these blades 62, 62, ... have pump actions for extruding the used paper pulp UPP discharged from the outlet 61 toward the discharge port 45b of the beating tank 45 by the centrifugal force by rotation of the rotary side beating disk 41.

By the drive motor 46 of the drive source, the rotary side beating disk 41 is rotated and driven oppositely to the fixed side beating disk 42, and the used paper pulp UPP supplied from the fragmenting tank 15 of the fragmenting unit 10 into the beating space B by way of the feed port 45a of the beating tank 45 and the inlet 60 flows from the inlet 60 into the beating space B, and passes through the beating space B, and receives the pressurizing and the beating action by the relatively rotating beating action surfaces 41a, 42a, and the ink particles forming the characters and drawings on the used paper UP are pulverized and destroyed, and the used paper pulp UPP is discharged from the outlet 61 by way of the discharge port 45b of the beating tank 45.

When being discharged from the outlet 61, the used paper pulp UPP further receives the pressurizing and the beating action at the position of the outlet 61 having the beating gap G, and is pulverized to specified micron size (to become micro fibers) by the beating gap G.

In this regard, in the present preferred embodiment, as mentioned above, one grinder 40 is installed in the used paper pulp circulation route 39 in the circulatory beating process (see Fig. 5), and one grinder 40 functions as a plurality of grinders, from the grinder at the beginning the grinder at the end of the beating process, and the beating gap G of the grinder 40 is controlled and adjusted by gap adjusting means 47 to be narrower gradually from the beginning till the end of the beating process.

The gap adjusting means 47 is specifically shown in Fig. 3, in which the pair of beating disks 41, 42 are relatively moved in the direction of axis of rotation, and the beating gap G of these beating disks 41, 42 is controlled and adjusted, and it is mainly composed of moving means 65 for moving the rotary side beating disk 41 in the direction of the axis of rotation, that is, in the axial direction of the rotation spindle 54, and a drive source 66 for driving this moving means 65.

The moving means 65 has the elevating member 55 mentioned above and a rotary mechanism 67 for rotating and moving this elevating member 55. The elevating member 55 is nearly cylindrical, and is supported, as shown in Fig. 3, on an apparatus base 53 so as to be movable back and forth concentrically and vertically on the pair of beating disks 41, 42, and the rotation spindle 54 is rotatably supported in the inside by way of the bearings 56, 56. At the upper end of the elevating member 55, a gear 67a of a rotary mechanism 67 is provided integrally, and a pinion 67b to be engaged with the gear 67a is mounted and fixed on a rotation shaft 66a of the drive motor 66 as the drive source.

The drive motor 66 is specifically an electrical motor, and this drive motor 66 is electrically connected to the device control unit 5.

By rotation of this drive motor 66, the elevating member 55 ascends and descends together with the rotation spindle 54 on the apparatus base 53 by way of the rotary mechanism 67, and the rotary side beating disk 41 integral with the rotation spindle 54 moves in the vertical direction to the fixed side beating disk 42, that is, in the direction of the axis of rotation, and thereby the beating gap G of the both beating disks 41, 42 is controlled and adjusted.

For this purpose, a position detection sensor (not shown) is provided for detecting the elevating position of the rotary side beating disk 41, and depending on the detection result of the position detection sensor, the drive motor 66 is driven and controlled. The position detection sensor may be realized by an encoder for detecting the number of revolutions of the drive motor 66, a proximity sensor for detecting the rotating position of the gear 67a or the pinion 67b of the rotary mechanism 67, or a proximity sensor for detecting directly the elevating position of the rotary side beating disk 41, and in the shown preferred embodiment, a proximity sensor for detecting the rotating position of the gear 67a of the rotary mechanism 67 is used. This position detection sensor is electrically connected to the device control unit 5.

The beating gap G of the beating disks 41, 42 is controlled and adjusted by the gap adjusting means 47 as shown in Fig. 6, in mutual cooperation with the circulation pump 69 as circulating means in the circulatory beating process in the used paper pulp circulation route 39.

That is, as shown in Fig. 5, the used paper pulp circulation route 39 is composed of circulation piping 39a and 39b, being formed in an annular loop by way of the fragmenting tank 15 of the fragmenting unit 10, the circulation pump 69, and one grinder 40, and at an intermediate point of the circulation piping 39b, a discharge piping 49 is branched and connected to communicate with the used paper pulp collecting tank 50 by way of the direction changeover valve 51.

The used paper pulp UPP fragmented and processed by the fragmenting unit 10 is circulated in the used paper pulp circulation route 39 by means of the circulation pump 69, and the beating process is executed by the grinder 40, and the beating gap G of the beating action surfaces 41a, 42a of the grinder 40 is adjusted at this time by the gap adjusting means 47 so as to be narrower gradually from the beginning till the end of the beating process.

By the gap adjusting means 47, the beating gap G of the grinder 40 is controlled and adjusted in the following methods: (i) the beating gap G of the grinder 40 is controlled to be narrower gradually from the beginning till the end of the beating process, and (ii) the beating gap G of the grinder 40 is controlled to be narrower continuously from the beginning till the end of the beating process, and others, and the former method is employed in the illustrated preferred embodiment.

The timing and magnitude of gradual narrowing of the beating gap G of the grinder 40 may be determined appropriately so that the beaten used paper pulp UPP may not be clogged in the beating gap G according to the conditions obtained by tests in consideration of the relation of the concentration of the used paper pulp UPP and the circulation flow rate and time of the used paper pulp UPP by the circulation pump 69.

In this illustrated preferred embodiment, the conditions are set as follows.
(a) Concentration of used paper pulp UPP being beaten: about 2%
(b) Size of beating gap G of the grinder 40: 4 stages at the following timing.

First stage: the beating gap G is 1 mm, being circulated for 5 minutes.

Second stage: the beating gap G is 0. 4 mm, being circulated for 25 minutes.

Third stage: the beating gap G is 0.12 mm, being circulated for 45 minutes.

Fourth stage: the beating gap G is 0.05 mm, and the beaten pulp is discharged and collected in the used paper pulp collecting tank 50.

The fragmenting tank 15 of the fragmenting unit 10 is included in the used paper pulp circulation route 39, and therefore in the beating process, the agitating device 16 of the fragmenting unit 10 is driven and controlled, and the fragmenting unit 10 is driven simultaneously with the beating unit 11.

In other words, in the circulatory beating process, while the used paper pulp UPP flows out from the fragmenting tank 15 into the used paper pulp circulation route 39, the used paper pulp UPP beaten by the grinder 40 flows into the fragmenting tank 15, and therefore in the fragmenting tank 15, components of used paper pulp UPP different in the degree of beating coexist, and by the agitating action of the agitating device 16, the degree of beating of the used paper pulp UPP in the fragmenting tank 15 becomes more uniform, so that the beating process is promoted.

The used paper pulp collecting tank 50 is a location for collecting the used paper pulp UPP beaten and pulverized to desired size by the beating unit 11, and the used paper pulp UPP collected in this location is sent into a pulp concentration adjusting unit (pulp concentration adjusting means) 3, before being sent into the paper making unit 4 of next paper making process, and is mixed and adjusted to a paper making concentration corresponding to the finished paper quality of the recycled paper RP to be recycled, and a pulp suspension PS is prepared.

The pulp concentration adjusting unit 3 is weight type means for adjusting the mixing rate of used paper UP and water W supplied into the apparatus by measuring the weight, and adjusting the concentration of the used paper pulp UPP supplied in the paper making unit 4, and specifically as shown in Fig. 6, it includes a beating concentration adjusting unit (beating concentration adjusting means) 3A, a paper making concentration adjustingunit (paper making concentration adjusting means) 3B, and a pulp concentration control unit (pulp concentration control means) 3C, and as described below, the beating concentration adjusted by the beating concentration adjusting unit 3A is set at a high concentration capable of beating by the pulp making unit 2, and the paper making concentration adjusted by the paper making concentration adjusting unit 3B is set at a low concentration cable of making paper by the paper making unit 4.

The beating concentration adjusting means 3A is for adjusting the beating concentration of the used paper pulp UPP in the pulp making unit 2 to a high concentration capable of beating by the pulp making unit 2, that is, a high concentration corresponding to the beating efficiency of the beating unit 11 (beating concentration adjusting process), and is mainly composed of, as mentioned above, a water feed pump 36 for adjusting the beating concentration of the water feeding device 17, and a beating concentration control unit 70.

The supply amount of white water W by the water feed pump 36 of the beating concentration adjusting means 3A is preferably determined so that the beating concentration of the used paper pulp UPP fragmented and beaten by the agitating device 16 may be, for example, the maximum concentration allowed for the beating capacity of the pulp making unit 2, that is, the maximum concentration allowed for the beating capacity of the grinder 40 of the beating unit 11 for executing the next process of beating process, and in the illustrated preferred embodiment, as mentioned above, it is set to be a high beating concentration of about 2%.

The beating concentration control unit 70, as described above, drives and controls the water feed pump 36 so as to supply a necessary amount of water into the fragmenting tank 15 depending on the measured result from the weight sensor 38. The beating concentration control unit 70 forms a part of the device control unit 5 as described below.

The paper making concentration adjusting unit 3B is for adjusting the paper making concentration of the used paper pulp UPP in the paper making unit 4 to a low concentration capable of making paper by the paper making unit 4, that is, an appropriate concentration corresponding to the finished paper quality of the recycled paper RP to be recycled (paper making concentration adjusting process), and is specifically designed to adjust the concentration of used paper pulp UPP manufactured in the pulp making unit 2 by division system, and is mainly composed of division extracting unit (division extracting means) 75, suspension preparing unit (suspension preparing means) 76, and paper making concentration control unit (paper making concentration control means) 77.

The division extracting unit 75 is designed to divide and extract only a specified small portion from the whole volume of the used paper pulp UPP manufactured in the preceding process of the pulp making unit 2, and mainly includes a used paper pulp feed pump 81 for division and extraction for extracting the used paper pulp UPP in the used paper pulp collecting tank 50, and sending into a concentration adjusting tank 80.

The suspension preparing unit 76 is for preparing a pulp suspension PS of a specified concentration, that is, an appropriate concentration corresponding to the finished paper quality of the recycled paper RP to be recycled, by adding a specified amount of water W for adjusting the concentration to the specified small portion of used paper pulp UPP divided and extracted by the division extracting unit 75, and mainly includes a water feed pump 37 of the water feeding device 17 as described above.

Although not shown specifically, in the bottom of the concentration adjusting tank 80, a weight sensor 79 composed of load cell is provided same as in the fragmenting tank 15 mentioned above, and the weight of the used paper pulp UPP supplied in the concentration adjusting tank 80 and the water for concentration adjustment is measured and controlled, and the weight sensor 79 is electrically connected to the device control unit 5.

The paper making concentration control unit 77 is for controlling by cooperating with the division extracting unit 75 and the suspension preparing unit 76, and forms a part of the device control unit 5, and in order to execute the paper making concentration adjusting process, the pumps 81, 37 of the division extracting unit 75 and the suspension preparing unit 76 are controlled in cooperation.

That is, from the whole volume of used paper pulp UPP collected in the used paper pulp collecting tank 50 from the beating unit 11 (in the illustrated preferred embodiment, about 2000 g of used paper UP + 100 liters of water W), a specified portion (1 liter in the illustrated preferred embodiment) of used paper pulp UPP is divided by the used paper pulp feed pump 81, and is transferred and contained in the concentration adjusting tank 80. As a result, its weight is detected and measured by the weight sensor 79, and the result is sent into the device control unit 5.

In succession, corresponding to the divided specified portion of the used paper pulp UPP, by the water feed pump 37, a specified amount of diluting water W (in the shown preferred embodiment, 9 liters; actually as measured by the weight sensor 79) is supplied into the concentration adjusting tank 80 from the white water collecting tank 35.

Hence, in the concentration adjusting tank 80, the used paper pulp UPP of beating concentration (2% in the illustrated preferred embodiment) is mixed with water W and diluted, and pulp suspension PS of an appropriate concentration corresponding to the finished paper quality of the recycled paper RP (about 0.2% concentration in the embodiment, that is, target concentration) is mixed and prepared.

The target concentration of the pulp suspension PS prepared in this manner is determined in consideration of the paper making capacity in the paper making unit 4 described below, on the basis of the results of preliminary experiments, and in the case of the illustrated embodiment, it is set at concentration of about 0.2 % as mentioned above.

The paper making concentration adjusting speed of the division type by the paper making concentration adjusting unit 3B is related to the supply capacity of the pulp suspension PS to the paper making unit 4 mentioned below, and is determined in consideration of the relation to the paper making process capacity in the paper making unit 4 (in the illustrated preferred embodiment, it is set to complete one process of the paper making concentration adjusting process by the division system in about 1 minute).

The pulp suspension PS thus prepared to a paper making concentration of target concentration (0.2%) in the concentration adjusting tank 80 is transferred and supplied into the pulp feed tank 84 from the concentration adjusting tank 80 by means of a first suspension feed pump 83, and is stored temporarily for use in the next process of the paper making unit 4. Hereinafter, this paper making concentration adjusting process is executed and repeated similarly on the whole volume of the used paper pulp UPP in the used paper pulp collecting tank 50. The pulp feed tank 84 is provided with a second suspension feed pump 85 for sending the pulp suspension PS into a paper making process 90 of the paper making unit 4.

The paper making concentration control unit 77 is composed to drive and control the division extracting unit 75 and the suspension preparing unit 76 so that at least the supply capacity of the concentration-adjusted pulp suspension PS to the later process of the paper making unit 4 may be higher than the paper making process capacity in the paper making unit 4. As a result, the execution of continuous and stable paper making process by the paper making unit 4 can be guaranteed.

Specifically, the concentration adjusting interval for adjusting the concentration of the used paper pulp UPP in the paper making concentration adjusting unit 3B in division system is determined approximately at a timing so that the pulp suspension PS in the pulp supply tank 84 may not be lower than a specific value.

In an example of the illustrated preferred embodiment, supposing that the paper making unit 4 is controlled to complete paper making of 10 liters of pulp suspension PS in about 2 minutes, as mentioned above, since it takes about 1 minute in one process of mixing and preparation of pulp suspension PS in the paper making concentration adjusting process 3B (one process of paper making concentration adjusting process by division system), the concentration adjusting interval by the paper making concentration adjusting process 3B (the execution interval of the paper making concentration adjusting process by each division system) is set within 1 minute. In this case, the concentration adjusting interval is determined also in consideration of the storage capacity of the pulp supply tank 84 so that the pulp suspension PS transferred and supplied in the pulp supply tank 84 may not overflow from the pulp supply tank 84.

Further, an agitating device 82 is provided in the pulp feed tank 84, and by the agitating action of this agitating device 82, the whole paper making concentration of the stored pulp suspension PS is kept uniformly at a specific value.

In this way, by the paper making concentration adjusting unit 3B, the concentration is adjusted not in batch, but in small divided portions, and the water consumption is saved substantially, and the shape and the size of the concentration adjusting tank 80 can be reduced substantially, and the used paper recycling apparatus 1 can be entirely contained in a compact size.

The pulp concentration control unit 3C is designed to drive and control the beating concentration adjusting unit 3A and the paper making concentration adjusting unit 3B in cooperation, and specifically receives the pulp concentration control information (the charged amount of the used paper UP, water feed volume into the fragmenting tank 15, the beating concentration of the used paper pulp UPP, etc.) from the beating concentration control unit 70 of the beating concentration adjusting unit 3A, and, depending on this control information, transmits the paper making concentration control information (the target paper making concentration of the used paper pulp UPP, the division extraction amount of the used paper pulp UPP from the used paper pulp collecting tank 50, the water feed amount into the concentration adjusting tank 80, etc.) for adjusting the concentration of the used paper pulp UPP manufactured in the pulp making unit 2 to the target value (the paper making concentration) to the paper making concentration control unit 77 of the paper making concentration adjusting unit 3B, thereby executing the paper making concentration adjusting process as mentioned above.

The paper making unit 4 is a process location for manufacturing recycled paper RP from the used paper pulp UPP manufactured in the pulp making unit 2, and mainly includes a paper making process unit 90, a dewatering roll unit 91, and a drying process unit 92.

The paper making process unit 90 is a location for producing moist paper from slurry of pulp suspension PS mixing both water W and used paper pulp UPP sent from the pulp feed tank 84 of the pulp making unit 2, and mainly includes a paper making conveyor 100 and a pulp feed unit 101.

The paper making conveyor 100 conveys while making the pulp suspension, and has a mesh belt 105 of paper making mesh structure composed of innumerable meshes for filtering and dewatering the pulp suspension PS, disposed in a structure running straightly toward its running direction.

More specifically, the paper making conveyor 100 is mainly composed of the mesh belt 105 formed in an endless belt structure for making and conveying the pulp suspension PS, and a drive motor 106 for moving and driving this mesh belt 105.

The plate material of paper making mesh structure for composing the mesh belt 105 is a material for filtering and dewatering the pulp suspension appropriately by innumerable meshes of the paper making mesh structure, and is preferably made of polypropylene (PP), polyethylene terephthalate (PET), polyamide (PA) (generally called Nylon, a registered trademark), stainless steel (SUS), and other materials excellent in corrosion resistance, and in the illustrated preferred embodiment, a PET mesh belt 105 excellent in heat resistance is used.

The mesh belt 105 is rotatably supported and suspended by way of a drive roller 107, a drive roller 108, a support roller 109, a dewatering roll 115, and a preliminary dewatering roll 117 as shown in Fig. 1, and is driven and coupled to the drive motor 106 by way of the drive roller 107.

The paper making process length L in the mesh belt 105 is set in a range of linear running direction length (in the illustrated case, the lateral direction length in Fig. 1) of the mesh belt 105 in the apparatus case 6 of furniture size.

The running speed of the mesh belt 105 is set in consideration of various conditions in the paper making process, and is preferably set at 0.1 m/min to 1 m/min, and in the illustrated preferred embodiment, it is set at 0.2 m/min. Incidentally, in the conventional large-scale used paper recycling plant, the running speed of the paper making belt of this kind is set at least higher than 100 m/min, and far higher than 1000 m/min in a rapid system.

The mesh belt 105, as shown in Fig. 1, is disposed and composed to run upward obliquely and linearly toward its running direction, and is extended as far as possible in the paper making process length L in a limited space of installation, and is enhanced in the filtering and dewatering efficiency in relation to the paper making mesh structure of the mesh belt 105.

The drive motor 106 for moving and driving the mesh belt 105 is specifically an electric motor, and is electrically connected to the device control unit 5. The drive motor 106 is shared as the running and driving source of the dewatering roll unit 91 and the drying process unit 92 mentioned below. The pulp feed unit 101 is a location for supplying the pulp suspension PS from the pulp making unit 2 on the mesh belt 105, and by this pulp feed unit 101, the pulp suspension PS is spread and supplied uniformly on the upper surface of the mesh belt 105. The paper making process unit 90 is provided at a start end position of the paper making process of the paper making conveyor 100.
A specific structure of the pulp feed unit 101 is not shown, but, for example, has a basic structure as disclosed in Japanese Patent Application Laid-Open No. 2007-308837.

The pulp suspension PS supplied into the pulp feed unit 101 from the pulp feed tank 84 by the second suspension feed pump 85 is stored temporarily by a specified amount in this pulp feed unit 101, and is diffused uniformly on the top of the mesh belt 105 by its staying action. The pulp suspension PS diffused uniformly on the top of the mesh belt 105 is conveyed together with the mesh belt 105 by the running action of the mesh belt 105 in the arrow direction, and is filtered by gravity by the mesh cells of the mesh belt 105, and is dewatered, and moist paper RP₀ is obtained.

The white water W filtered and dewatered by the mesh belt 105 (the pulp water of extremely low concentration filtered by the paper making mesh in the paper making process) is collected in the white water collecting tank 35 of the water feeding device 17 as mentioned above.

The dewatering roll unit 91 is a location for squeezing and dewatering the moist paper RP₀ on the mesh belt 105 at the linkage point of the paper making process unit 90 and the drying process unit 92 mentioned below.

Specifically, a smooth surface belt 125 of the drying process unit 92 at the downstream side described below, and the mesh belt 105 of the paper making process unit 90 at the upstream side disposed in upper and lower layers as shown in Fig. 1, and the upper and lower adjacent portions of the smooth surface belt 125 and the mesh belt 105 are formed as linkage point, and the dewatering roll unit 91 is pressed and rolled from the upper and lower sides of the mesh belt 105 and the smooth surface belt 125.

A specific structure of the dewatering roll unit 91 is not shown, but has a basic structure as disclosed in patent document 1 (Japanese Patent Application Laid-Open No. 2007-308837). That is, the dewatering roll unit 91 mainly includes a dewatering roll 115, a press roll 116, and a drive motor 106, and also includes assisting parts, that is, a preliminary dewatering roll 117, and a slurry preventive roll 118.

The dewatering roll 115 is to roll and press on the mesh belt 105 from the lower side, and is composed of, although not shown specifically, a cylindrical roll of material of high rigidity, and a dewatering layer of porous material having fine and continuous pores wound around on its outer circumference.

The press roll 116 is to roll and press the smooth surface belt 125 of the drying process unit 92 described later from the upper side, and specifically a cylindrical roll of material of high rigidity is used. In the shown preferred embodiment, the press roll 116 is a stainless steel cylindrical roll.

The dewatering roll 115 and the press roll 116 are specifically driven and coupled by one same drive motor 106, and the both rolls 115, 116 are rotated and driven in cooperation. In this case, the rolls 115, 116 are rotated and driven so that the outer circumferences of both rolls 115, 116 may roll and contact with each other by a very small mutual difference in rotating speed, on the contacting surfaces of the mesh belt 105 and the smooth surface belt 125 (the lower side of the mesh belt 105 and the upper side of the smooth surface belt 125) being pressed, rolled and squeezed between the mutual outer circumferences.

More specifically, the rotating speed of the press roll 116 is set slightly larger than the rotating speed of the dewatering roll 115, and hence the running speed of the smooth surface belt 125 is set larger than the running speed of the mesh belt 105. In such configuration, as mentioned below, the moist paper RP₀ squeezed and dewatered by the dewatering roll unit 91 is rolled and transferred to the lower side of the smooth surface belt 125 a the upper side from the upper side of the mesh belt 105 of the lower side, and at this time a tension is applied to the moist paper RP₀, and therefore creasing of the moist paper RP₀ is effectively prevented.

The drive motor 106, in the illustrated preferred embodiment, is common with the drive motor of the paper making process unit 90 as mentioned below.

By driving of the drive motor 106, the both rolls 115, 116 roll and squeeze in pressurized state from upper and lower sides of the both belts 105, 125, and the moisture contained in the moist paper RP₀ on the mesh belt 105 is absorbed and removed by the dewatering roll 115 by way of the mesh belt 105. The squeezed and removed white water W is collected in the white water collecting tank 35 in the water feeding device 17.

The preliminary dewatering roll 117 and the slurry preventive roll 118 are provided for assisting the squeezing and dewatering actions of the press roll 116 and the dewatering roll 115 in the dewatering roll unit 91.

The preliminary dewatering roll 117 is disposed at a position for applying a tension by rolling on the mesh belt 105 from the lower side, at the upstream side of the dewatering roll unit 91.

The preliminary dewatering roll 117 is not specifically shown in specific structure, but is similar to the dewatering roll 115, and is composed of a cylindrical roll of material of high rigidity, and a dewatering layer made of porous material of fine continuous pores wound around on its outer circumference.

The moist paper RP₀ uniformly disposed on the top of the mesh belt 105 and conveyed together with the mesh belt 105 is filtered and dewatered by the mesh belt 105, and the moisture is also absorbed and removed by the preliminary dewatering roll 117 at the same time, and the squeezing and dewatering action by the press roll 116 and the dewatering roll 115 is preliminarily assisted.

The slurry preventive roll 118 is disposed, as shown in Fig. 1, at a nearby position at the upstream side of the dewatering roll unit 91, so as to roll and press the smooth surface belt 125 from the upper side, and press the smooth surface belt 125 to the moist paper RP₀ on the mesh belt 105 at the lower side.

The moist paper RP₀ squeeze and dewatered by the dewatering roll unit 91 is sent to a downstream side position of the dewatering roll unit 91, and is rolled and transferred to the lower side of the smooth surface belt 125 at the lower side from the upper side of the mesh belt 105 at the lower side, and is conveyed together with the smooth surface belt 125, and sent the drying process by the drying process unit 92.

This transfer action is considered to be produced from the smooth surface structure of the smooth surface belt 125. That is, the surface of the mesh belt 105 at the lower side has a fine concave and convex surface with multiple openings of fine continuous pores, while the surface of the smooth surface belt 125 at the upper side is a smooth surface free from pores, and hence it is considered that the moist paper RP₀ slightly containing moisture is estimated to be adsorbed by the surface tension against the surface of the smooth surface belt 125.

The drying process unit 92 is a location for drying the moist paper RP₀ squeezed and dewatered by the dewatering roll unit 91 after the paper making process in the paper making process unit 90, and producing recycled paper RP, and is mainly composed of a drying conveyor 121 and a heating and drying unit 122.

The drying conveyor 121 is designed to convey the moist paper RP₀ squeezed and dewatered in the dewatering roll unit 91 while smoothing, and includes the smooth surface belt 125 and the drive motor 106 for moving and driving the smooth surface belt 125.

The smooth surface belt 125 is designed to convey the moist paper RP₀ while heating and drying, and is specifically an endless belt connected and formed in an annular shape of a specified length by plate members of smooth surface structure having a specified width. The plate members of smooth surface structure are capable of finishing one side of the moist paper RP₀ to a proper smooth surface, and are made of a material capable of withstanding the heating action by the heating and drying unit 122 described below, and preferably elastic heat-resistant materials such as fluororesin and stainless steel are used, a fluororesin belt is used in the shown preferred embodiment.

The smooth surface belt 125 is rotatably suspended and supported, as shown in Fig. 1, by way of a drive roller 126, driven rollers 127, 128, a press roll 116, a slurry preventive roll 118, smooth finishing rolls 129, 129, and preliminary dewatering roll 117, and is driven by and coupled to the drive motor 106 by way of the drive roller 126.

The drive motor 106 for moving and driving the smooth surface belt 125 is, as mentioned above, also used commonly with the moving and driving source of the paper making conveyor 100 and the dewatering roll 91.

The heating and drying unit 122 is a location for heating and drying the moist paper RP₀ on the smooth surface belt 125, and has a heater plate 130 as a heating unit disposed on the way of the running route of the smooth surface belt 125.

The heater plate 130 in the shown preferred embodiment is disposed in a horizontal running section in the running route of the smooth surface belt 125, and is specifically disposed to heat and dry the moist paper RP₀ on the smooth surface belt 125 indirectly by way of the smooth surface belt 125.

In the running path of the smooth surface belt 125, the two smooth finishing rolls 129, 129 are disposed, and the moist paper RP₀ on the smooth surface belt 125 is sequentially rolled and pressed, and the one side and the opposite surface of the moist paper RP₀ contacting with the surface of the smooth surface belt 125 are finished to a proper smooth surface.

At the downstream side of the heating and drying unit 122 of the smooth surface belt 125, a stripping member 131 is disposed, and it is specifically a heat resistant flexible spatula, and the dried paper heated and carried on the smooth surface belt 125, that is, the recycled paper RP is sequentially peeled off from the holding surface of the smooth surface belt 125.

In this relation, at the terminal end position of the running route of the smooth surface belt 125 at the downstream side of the stripping member 131, a fixed size cutter 132 is provided, and the recycled paper RP separated from the smooth surface belt 125 is cut to a specified shape by this fixed size cutter 132 (in the shown preferred embodiment, a format of A4 size), and the recycled paper RP of re-usable size is obtained, and discharge from a discharge port 136 of the apparatus case 6.

The device control unit 5 is designed to automatically control the operations of the drive units by interlocking mutually, such as the pulp making unit 2, the pulp concentration adjusting unit 3, and the paper making unit 4, and is specifically composed of a microcomputer including CPU, ROM, RAM and I/O ports.

The device control unit 5 stores programs for mutually interlocking and executing the pulp making process of the pulp making unit 2, the concentration adjusting process of the concentration adjusting unit 3, and the paper making process of the paper making unit 4, and is composed of, as shown in Fig. 8, a main control unit 140, a fragmenting control unit 141 for controlling the drive source 31 of the fragmenting unit 10 (16) in the pulp making unit 2, a beating control unit 142 for controlling the drive sources 46, 66, 69 of the beating unit 11 (40, 47), a pulp concentration control unit 3C for controlling the drive sources 36, 37, 81, 82 of the pulp concentration adjusting unit 3 (3A, 3B), and a paper making control unit 143 for controlling the drive sources 85, 106, 130, 132 of the paper making process unit 90, the dewatering roll unit 91 in the paper making unit 4, and the drying process unit 92.

The main control unit 140 stores various information necessary for driving of the drive sources of the drive units 2 (10, 11), 3 (3A, 3B), 4 (90, 91, 92), for example, the driving time and rotating speed of the agitating device 16 in the fragmenting unit 10, the water feed timing and water feed volume of the water feeding device 17, the driving time and circulation amount of the circulation pump 69 in the beating unit 11, the driving time and rotating speed of the grinder 40, the adjusting timing and adjusting amount of beating gap G of the gap adjusting means 47, the running speed of the conveyors 100, 121 in the paper making unit 4, the driving time of the heating and drying unit 122, and the operation timing of the fixed size cutter 132, and others are appropriately and selectively entered by the keyboard and the like preliminarily as the data, and according to such control data, the detection results of the weight sensor 38, the position detection sensor and others are received, and thereby the control units 141, 142, 3C, 143 are controlled appropriately.

The used paper recycling apparatus 1 having such configuration is started when the power source is turned on, and the individual control units 2 (10, 11), 3 (3A, 3B) and 4 (90, 91, 92) are automatically controlled in mutual cooperation by the device control unit 5, and thereby the used paper UP, UP, ... charged into the inlet 7 of the apparatus case 6 are fragmented and beaten by the fragmenting unit 10 and the beating unit 11 of the pulp making unit 2, and the used paper pulp UPP is manufactured, then pulp suspension PS of paper making concentration is prepared in the pulp concentration adjusting unit 3, and this pulp suspension PS is processed in the paper making process unit 90, the dewatering roll unit 91, and the drying process unit 92 of the paper making unit 4, and recycled paper RP is produced, and is discharged into a recycled paper discharge tray 135 from the discharge port 136b of the apparatus case 6.

In the pulp making unit 2, the drive units are mutually interlocked and controlled automatically by a fragmenting control unit 141 and a beating control unit 142, and the following processes are executed.
i) The worker, as mentioned above, puts a specified number of sheet (about 500 sheets or about 2000 g in the illustrated preferred embodiment) of used paper UP of A4 format PPC into the fragmenting tank 15, and closes the inlet 7 after the notice by sound and/or display, and about 98 liters of water is charged into the water feeding device 17.
ii) The agitating device 16 is driven, and the used paper UP, UP, ... charged in the fragmenting tank 15 are agitated in normal and reverse rotation of the agitating impeller 30 driven by the drive motor 31, and mixed for a specified time (about 10 minutes to 20 minutes in the illustrated preferred embodiment) in the water supplied from the water feeding device 17, and the used paper UP, UP, ... are fragmented and beaten to be used paper pulp UPP.
iii) By driving of the agitating device 16 for a specified time, the used paper UP, UP,... are transformed into used paper pulp UPP, and the inlet 7 of the fragmenting tank 15 is opened by the opening valve 19, and the fragmenting tank 15 communicates with the used paper pulp circulation route 39, and the circulation pump 69, the grinder 40 and the gap adjusting means 47 of the beating unit 11 are driven.
   The agitating device 16 of the fragmenting unit 10 is driven, and the used paper pulp UPP left over in the fragmenting tank 15 and the used paper pulp UPP refluxed in the fragmenting tank 15 are agitated, and the degree of beating of the used paper pulp UPP in the fragmenting tank 15 is made uniform, and the beating process is promoted.
iv) In Fig. 5, the used paper pulp UPP fragmented by the fragmenting unit 10 is circulated in the used paper pulp circulation route 39 by the circulation pump 69, and is beaten by the grinder 40 (beating process). At this time, the beating gap G of the beating action surfaces 41a, 42a of the grinder 40 is adjusted by the gap adjusting means 47 to be narrower gradually from the beginning till the end of the beating process, and the beating process continues.
v) In the illustrated preferred embodiment, as mentioned above, at the first stage, the beating gap G is adjusted to 1 mm, and the used paper pulp UPP is circulated for 5 minutes, and pressurized and beaten by the grinder 40.
vi) At the second stage, the beating gap G is adjusted to 0.4 mm, and the used paper pulp UPP is circulated for 25 minutes, and pressurized and beaten by the grinder 40.
vii) At the third stage, the beating gap G is adjusted to 0.12 mm, and the used paper pulp UPP is circulated for 45 minutes, and pressurized and beaten by the grinder 40.
viii) At the final fourth stage, the beating gap G is adjusted to 0.05 mm, and the used paper pulp UPP is pressurized and beaten by the grinder 40, and is pulverized to a specified micron size (micro fibers are formed).
ix) The direction changeover valve 51 of the used paper pulp circulation route 39 is changed over, and the used paper pulp UPP discharged from the grinder 40 is discharged and collected in the used paper pulp collecting tank 50 by way of the discharge piping 49.
x) The used paper pulp UPP collected in the used paper pulp collecting tank 50 adjusted of its concentration to a target appropriate paper making concentration in division type, as mentioned above, by the beating concentration adjusting unit 3B of the pulp concentration adjusting unit 3, and is sent into the paper making unit 4 in the next process, and is recycled into paper.

In the used paper recycling apparatus 1 having such configuration, the following characteristic effects are exhibited.
(1) The beating concentration of the used paper pulp UPP adjusted in the beating concentration adjusting process is at a high concentration capable of beating in the pulp making unit 2, for example, a maximum concentration allowable for the beating capacity of the pulp making unit 2, and the paper making concentration of the used paper pulp UPP adjusted in the paper making concentration adjusting process is set at a low concentration capable of making paper in the paper making unit 4, for example, an appropriate concentration corresponding to the finished paper quality of the recycled paper RP to be recycled, and the concentration of the used paper pulp UPP can be adjusted in two stages, and the concentration can be adjusted by effectively utilizing the small working space of the used paper recycling apparatus 1 of furniture size, and the used paper can be recycled at high operation efficiency.
   That is, the beating process in the pulp making unit 2 of relatively high concentration is carried out efficiently by the used paper pulp UPP adjusted to a high concentration (beating concentration) by the beating concentration adjusting unit 3A, and this used paper pulp UPP is adjusted to a low concentration (paper making concentration) corresponding to the finished paper quality of the recycled paper RP by the paper making concentration adjusting unit 3B, and is sent into the successive paper making unit 4, so that a series of used paper recycling process can be efficiently carried out in a narrow working space.
(2) Moreover, since particularly large power is not needed for operation of the used paper recycling apparatus 1 of small size and high operation efficiency, the running cost is low, and it is ideal for the used paper recycling apparatus 1 of furniture size that can be installed in a small shop or in a room of general household.
   It can be installed not only in a large office, but also in a small shop or a room in general household, and it is capable of preventing leak or disclosure of confidential information, personal information or various data securely, and keeping a high confidentiality, thereby realizing the used paper recycling apparatus 1 of furniture size.
(3) Since the pulp concentration is adjusted by the weight type for adjusting the concentration of the used paper pulp UPP by measuring the weight for determining the mixing rate of used paper UP and water W, the concentration can be adjusted flexibly if the used paper is charged irregularly.
(4) In the paper making concentration adj usting process, a specified small portion is divided out of the whole volume of the used paper pulp UPP manufactured in the pulp making unit 2, and a specified amount of water W for concentration adjustment is added to the specified small portion of the divided used paper pulp UPP, and the concentration of the used paper pulp UPP is adjusted, not in batch of the whole volume, but in small portions divided type, and therefore the water consumption is saved and the apparatus is reduced in size while the processing capacity is enhanced.

In the preferred embodiment described herein, the design can be changed and modified as follows.

For example, in the illustrated preferred embodiment, the paper making concentration adjusting unit 3B is of weight type, and the division extracting unit 75 divides and extracts a specified small portion out of the whole volume of the used paper pulp UPP manufactured in the preceding process of the pulp making unit 2, and the suspension preparing unit 76 adds a specified amount of water for concentration adjustment by weight measurement to the specified small portion of the used paper pulp UPP divided and extracted by the division extracting unit 75, and thereby pulp suspension PS of specified concentration is prepared, but instead of the weight type, this operation may be carried out by volume measurement.

That is, the division extracting unit 75 has a pulp division tank (not shown) for dividing and containing a specified small portion out of the whole volume of the used paper pulp UPP manufactured in the pulp manufacturing unit 2, and the suspension preparing unit 76 has a concentration adjusting tank (not shown) for containing a specified amount of used paper pulp UPP and concentration adjusting water divided and contained in the pulp division tank, and the water may be supplied into the concentration adjusting tank so as to reach a specified volume including the specified amount of used paper pulp UPP supplied from the pulp division tank into the concentration adjusting tank.

Having described preferred embodiments of the invention with reference to the accompanying drawings, it is to be understood that the invention is not limited to the preferred embodiment alone, and that various changes and modifications may be effected therein by one skilled in the art without departing from the scope or spirit of the invention as defined in the appended claims.

## Claims

1. A pulp concentration adjusting method of a used paper recycling apparatus, being a pulp concentration adjusting method used in a used paper recycling apparatus, the used paper recycling apparatus comprising a pulp making unit for fragmenting and beating the used paper to make used paper pulp, and a paper making unit for manufacturing recycling paper by making from the used paper pulp manufactured in this pulp making unit, these pulp making unit and paper making unit being installed in an apparatus case of furniture size,
the pulp concentration adjusting method being intended to adjust the concentration of the used paper pulp supplied in the paper making unit by adjusting the mixing rate of the used paper and water supplied in the apparatus, and the method comprising:
a beating concentration adjusting process for adjusting the beating concentration of the used paper pulp in the pulp making unit, and
a paper making concentration adjusting process for adjusting the paper making concentration of the used paper pulp in the paper making unit,
wherein the beating concentration adjusted in the beating concentration adjusting process is set at a high concentration capable of beating in the pulp making unit, and the paper making concentration adjusted in the paper making concentration adjusting process is set at a low concentration capable of making paper in the paper making unit.

2. The pulp concentration adjusting method of the used paper recycling apparatus of claim 1,
wherein the beating concentration adjusted in the beating concentration adjusting process is set at a maximum concentration allowable for the beating capacity of the pulp making unit.

3. The pulp concentration adjusting method of the used paper recycling apparatus of claim 1,
wherein the paper making concentration adjusted in the paper making concentration adjusting process is set at an appropriate concentration corresponding to the finished paper quality of the recycled paper to be recycled.

4. The pulp concentration adjusting method of the used paper recycling apparatus of claim 1,
wherein the paper making concentration adjusting process is intended to divide a specified small portion from the whole volume of the used paper pulp manufactured in the pulp making unit, and add a specified amount of water for adjusting the concentration corresponding to the divided small portion of the used paper pulp, thereby mixing and adjusting a pulp suspension of a specified concentration in a divided style.

5. The pulp concentration adjusting method of the used paper recycling apparatus of claim 4,
wherein in the paper making concentration adjusting process, the concentration adjusting interval for adjusting the concentration of the used paper pulp in the divided style is determined so that at least the supply capacity of the concentration-adjusted pulp suspension into the later process of the paper making unit may be larger than the paper making process capacity in the paper making unit.

6. The pulp concentration adjusting method of the used paper recycling apparatus of any one of claims 1 to 5,
wherein in the beating concentration adjusting process and the paper making concentration adjusting process, the concentration is adjusted by weight type adjustment by measuring the weight of the mixing rate of the used paper and water to be charged into the apparatus.

7. A pulp concentration adjusting device of a used paper recycling apparatus, being a pulp concentration adjusting device used in a used paper recycling apparatus, the used paper recycling apparatus comprising a pulp making unit for fragmenting and beating the used paper to make used paper pulp, and a paper making unit for manufacturing recycling paper by making from the used paper pulp manufactured in the pulp making unit, these pulp making unit and paper making unit being installed in an apparatus case of furniture size,
the pulp concentration adjusting device being intended to adjust the concentration of the used paper pulp supplied in the paper making unit by adjusting the mixing rate of the used paper and water supplied in the apparatus, the device comprising:
beating concentration adjusting means for adjusting the beating concentration of the used paper pulp in the pulp making unit,
paper making concentration adjusting means for adjusting the paper making concentration of the used paper pulp in the paper making unit, and
pulp concentration control means for driving and controlling in cooperation with the beating concentration adjusting means and the paper making concentration adjusting means,
wherein the beating concentration adjusted by the beating concentration adjusting means is set at a high concentration capable of beating by pulp making unit, and the paper making concentration adjusted by the paper making concentration adjusting means is set at a low concentration capable of making paper in the paper making unit.

8. The pulp concentration adjusting device of the used paper recycling apparatus of claim 7,
wherein the beating concentration adjusted by the beating concentration adjusting means is set at a maximum concentration allowable for the beating capacity of the pulp making unit.

9. The pulp concentration adjusting device of the used paper recycling apparatus of claim 7,
wherein the paper making concentration adjusted by the paper making concentration adjusting means is set at an appropriate concentration corresponding to the finished paper quality of the recycled paper to be recycled.

10. The pulp concentration adjusting device of the used paper recycling apparatus of claim 7,
wherein the paper making concentration adjusting means includes division extracting means for dividing and extracting a specified small portion from the whole volume of the used paper pulp manufactured in the pulp making unit, suspension preparing means for preparing a pulp suspension of a specified concentration by adding a specified amount of water for adjusting the concentration to the specified small portion of the used paper pulp divided and extracted by the division extracting means, and paper making concentration control means for driving and controlling in cooperation with the division extracting means and the suspension preparing means.

11. The pulp concentration adjusting device of the used paper recycling apparatus of claim 10,
wherein the paper making concentration adjusting means drives and controls the division extracting means and the suspension preparing means so that at least the supply capacity of the concentration-adjusted pulp suspension into the later process of the paper making unit may be larger than the paper making process capacity in the paper making unit.

12. The pulp concentration adjusting device of the used paper recycling apparatus of claim 7,
wherein the paper making concentration adjusting means includes a pulp supply tank for storing the pulp suspension adjusted to a specified concentration, and this pulp supply tank has agitating means for agitating the pulp suspension stored and held in the pulp supply tank.

13. The pulp concentration adjusting device of the used paper recycling apparatus of any one of claims 7 to 12,
wherein the beating concentration adjusting means and the paper making concentration adjusting means are of weight type, that is, the mixing rate of the used paper and water to be charged into the apparatus is adjusted by measuring the weight, and the concentration of the used paper pulp supplied in the paper making unit is adjusted.

14. A used paper recycling apparatus, comprising a pulp making unit for fragmenting and beating the used paper to manufacturing used paper pulp, a paper making unit for making the used paper pulp manufactured in the pulp making unit and producing recycled paper, a pulp concentration adjusting unit for adjusting the concentration of the used paper pulp supplied in the paper making unit, and a device control unit for driving and controlling in cooperation with the pulp making unit, the paper making unit, and the pulp concentration adjusting unit, these component units being installed in an apparatus case of furniture size,
wherein the pulp concentration adjusting unit includes beating concentration adjusting means for adjusting the beating concentration of the used paper pulp in the pulp making unit, paper making concentration adjusting means for adjusting the paper making concentration of the used paper pulp in the paper making unit, and pulp concentration control means for driving and controlling in cooperation with the beating concentration adjusting means and the paper making concentration adjusting means, and
the beating concentration adjusted by the beating concentration adjusting means is set at a high concentration capable of beating in the pulp making unit, and the paper making concentration adjusted by the paper making concentration adjusting means is set at a low concentration capable of making paper in the paper making unit.
